# EUROPÄISCHE PATENTANMELDUNG

(11) **EP 2 388 377 A2**
(43) Veröffentlichungstag der Anmeldung: **23.11.2011**
(21) Anmeldenummer: 11004056.5
(22) Anmeldetag: 17.05.2011
(51) Int. Cl.: E02F 5/10, E02F 5/14, F16L 1/036, E02F 3/96

(54) **Verfahren und Vorrichtung zur Herstellung einer Rohrbettung**

(30) Priorität: 22.05.2010 DE 102010021335
(71) Anmelder: Baldinger, Frank, 79291 Freiburg-Merdingen (DE)
(72) Erfinder: Baldinger, Frank, 79291 Freiburg-Merdingen (DE)
(74) Vertreter: Maucher, Wolfgang

(57) **Zusammenfassung**

Die Erfindung betrifft ein Verfahren sowie eine Vorrichtung zur Herstellung einer Rohrbettung oder einer Rohrbettprofilierung. Das erfindungsgemäße Verfahren umfasst zumindest folgende Verfahrensschritte: a) Ausheben eines Grabens, b) Herstellen einer Grabensohle, c) Herstellen der Rohrbettung oder Rohrbettprofilierung mittels einem Rohrbettfertiger (7), der zumindest in einem Teilbereich seiner Außenkontur an die Außenkontur des zu verlegenden Rohres angepasst ist und an dessen Längsseiten beidseits jeweils zumindest ein Führungs- oder Seitenelement (8) seitlich vorsteht.

## Beschreibung

Die Erfindung betrifft ein Verfahren zur Herstellung einer Rohrbettung oder einer Rohrbettprofilierung mit folgenden Schritten: a) Ausheben eines Grabens, b) Herstellen einer Grabensohle und c) Herstellen der Rohrbettung oder Rohrprofilierung mittels einem Rohrbettfertiger, der zumindest in einem Teilbereich seiner Außenkontur an die Außenkontur des zu verlegenden Rohres angepasst ist.

Die Erfindung befasst sich auch mit einer Vorrichtung zur Herstellung einer solchen Rohrbettung oder einer Rohrbettprofilierung, die einen Rohrbettfertiger aufweist, der zumindest in einem Teilbereich seiner Außenkontur an die Außenkontur des zu verlegenden Rohres formangepasst ist und an dessen Längsseiten beidseits jeweils zumindest ein Führungs- oder Seitenelement seitlich vorsteht.

Rohrbettungen werden nach dem derzeitigen Stand der Technik dadurch hergestellt, dass ein Graben ausgehoben und anschließend eine höhengerechte, neigungsgerecht und richtungsgerechte Grabensohle mit Hilfe einer Lasereinrichtung angelegt wird. Diese Grabensohle muss in einem ersten Verdichtungsvorgang verdichtet werden, um einen tragfähigen Untergrund zu erhalten. Mit angeliefertem, kornabgestuftem, mineralischem Bettungsmaterial wird eine horizontale Rohrbettung als Auflager für die zu verlegenden Rohre hergestellt und in einem zweiten Verdichtungsvorgang ebenfalls verdichtet. Danach werden die verwendeten Rohre auf dieses Rohrbett ebenfalls höhen-, neigungs- und richtungsgerecht mit Hilfe der Lasereinrichtung verlegt. Die Rohre liegen anschließend punktgelagert auf dieser verdichteten Sohle auf. Erd- und rohrstatisch ist dies, insbesondere bei biegeweichen Kunststoffrohren, problematisch und unerwünscht. In einem nachfolgenden Verfahrensschritt wird das Rohr anschließend mit einem ebenfalls kornabgestuften, mineralischen Rohrumhüllungsmaterial überschüttet. Nun folgt in einem dritten Verdichtungsvorgang eine weitere Verdichtung des Rohrzonen- beziehungsweise Leitungszonenmaterials. Da ein Rohr insbesondere im unteren Drittel des Rohrsegments an der Grabensohle aus rohr- und erdstatischen Gründen eine statisch wirksame und belastbare Auflage zur Aufnahme der Reaktionskräfte benötigt, sollte insbesondere dieser Bereich der Rohrbettung besonders gut und wirksam verdichtet sein. In keinem Fall dürfen Hohlräume entstehen, um unerwünschten Deformationsspannungen der Rohre entgegenzuwirken. Bei den vorbekannten Verfahren kann jedoch die Rohrbettung insbesondere im Bereich des sogenannten "Zwickels", also der dreiecksförmigen Zone unter dem Rohrkämpfer (d.h. die horizontale Mittellinie des Rohrquerschnittes) nur ungenügend mit Hilfe des mineralischen Schüttgutes und/oder mit Hilfe der über Verdichtungsgeräte eingebrachten Verdichtungsenergie beeinflusst werden. Dies stellt immer noch ein wenig beachtetes Problem bei der Rohrverlegung dar. Nachteilig ist auch, dass sich die Verdichtungswirkung und der Verdichtungsgrad nicht messen und nicht protokollieren lässt.

Einen teilweisen Lösungsansatz stellt die in DE 100 46 299 C1 und in DE 102 29 435 B beschriebene Profilierschildtechnik dar. So ist aus der DE 102 29 435 B bereits ein Verfahren zum mannlosen, lasergesteuerten Verlegen von Rohren bekannt. Bei dem vorbekannten Verfahren wird zunächst ein Graben ausgehoben, um anschließend an beziehungsweise in der Grabensohle unter Zuhilfenahme eines Profilierschildes die Außenkontur eines zu verlegenden Rohres zur Herstellung als Rohrbettung vorzusehen. Dabei weist das Profilierschild an seiner Unterseite eine Außenkontur auf, die der Umfangskontur des Rohres entspricht, welches auf die Rohrbettung aufgelegt wird. Um die gewünschte Höhenlage einhalten zu können, wird im Graben ein Laserstrahl parallel zur Richtung des zu verlegenden Rohres derart ausgerichtet, dass der Laserstrahl stets in einem vorbestimmten Bereich auf dem Profilierschild auftrifft.

Das sich entsprechend dem Baufortschritt ständig wiederholende Ausrichten des Profilierschildes in Bezug auf die gewünschte Neigung, Höhenlage und Richtung des Profilierschildes in Bezug auf den Laserstrahl erfordern, insbesondere bei einem gekrümmten Verlauf der Rohrführung, einen ganz erheblichen Aufwand. Darüber hinaus ist das Herstellungsergebnis aber auch davon abhängig, dass das Rohrbett den während der Bauphase und während des Betriebes auftretenden Belastungen stand hält und die Profilgeometrie eingehalten werden kann. Dies gelingt nur bei kohäsivem Material. Eine Verdichtung des Rohrzonenmaterials findet dabei nicht statt. An der Berührungskante zwischen Profilierschild und Boden ist eine leichte Auflockerung nicht zu vermeiden. Das profilierte, überschüssige Erdreich muß ausgelagert werden.

Aus der DE 196 27 465 C2 ist bereits ein Verfahren zum Aufbereiten von Aushubmaterial unter Beimengung von Zuschlagstoffen bekannt. Um nicht einbaufähige Böden oder nicht einbaufähiges Aushubmaterial direkt auf der Baustelle derart aufbereiten zu können, dass es zur Wiederaufbefüllung und als Rohrbettmaterial verwendet werden kann, wird zunächst die erforderliche Menge an Zuschlagstoffen, bezogen auf das aufzubereitende Aushubmaterial, ermittelt und der ermittelte Betrag an eine Dosiervorrichtung für den Zuschlagstoff weitergegeben, wo die erforderliche Menge an Zuschlagstoff von der Dosiervorrichtung in einen Schaufelseparator eingebracht und mit der im Schaufelseparator befindlichen Menge des Aushubmaterials vermischt wird, wobei während des Mischvorganges das Aushubmaterial ab einer bestimmten Körnung davon separiert wird, um ein einbau- und verdichtungsfähiges Material zu gewinnen.

Ein aus dem jeweils vorhandenen Aushubmaterial gemischtes Rohrbettungsmaterial weist jedoch unerwartete und unterschiedliche Materialeigenschaften auf, die eventuell die Festigkeit und Tragfähigkeit insbesondere im Grundwasserbereich beeinflusst.

Aus der DE 103 32 316 B3 ist bereits ein Verfahren zur Herstellung einer Rohrbettung bekannt, bei dem in einem ersten Verfahrensschritt ein Graben ausgehoben wird, um in einem nachfolgenden Verfahrensschritt die Rohrbettung durch Profilierung des Bodens mit einem Profilierschild erzeugen zu können. Dabei weist das als Rohrbettfertiger dienende Profilierschild eine Außenkontur auf, die jedenfalls in dem Bereich, in welchem das Rohr die Rohrbettung kontaktiert, im wesentlichen der Außenkontur des Rohres entspricht. Das Profilierschild weist dazu in seinem untersten, der Rohrbettung zugewandten Bereich zumindest einen Vorsprung auf, um in der Rohrbettung eine in Längsrichtung des zu verlegenden Rohres orientierte Rinne auszubilden. Das Profilierschild bildet dabei eine Schablone, welche in Grabenlängsrichtung über das aufbereitete und verdichtete Bodenmaterial geführt wird. Bei dem vorbekannten Verfahren ist vorgesehen, dass ein Teil des ausgehobenen oder auch ein Teil des noch im Graben befindlichen Bodens entsprechend der geforderten Qualität der Rohrbettung aufbereitet oder aber alternatives Bodenmaterial, wie zum Beispiel Sand oder ähnliches, in den Graben eingebracht wird. In der DE 103 32 316 B3 ist nicht weiter ausgeführt, wie das Profilierschild derart über den als Rohrbettung bestimmten Boden gezogen werden kann, dass die Rohrbettung entsprechend dem gewünschten Rohrverlauf ausgerichtet ist.

In der DE 199 40 875 C1 wird bereits ein Verfahren beschrieben, bei dem zumindest ein Teil des ausgehobenen oder an der Grabensohle anstehenden Bodens aufbereitet wird, wobei der Boden während des Aufbereitens homogenisiert und ihm ein Bindemittel zugesetzt wird. Der derart aufbereitete Boden wird anschließend mittels einem Schaber profiliert, der in Längsrichtung des zu verlegenden Rohres über den verdichteten Boden geführt wird. Dabei bildet der Schaber, der vorzugsweise mit Hilfe einer Schnellwechseleinrichtung an einem Baggerarm angebracht sein kann, eine Schablone, mit Hilfe der das erforderliche Profil der Rohrbettung durch Ziehen der Schablone durch den verdichteten Boden ausgebildet wird. Um die Schablone entsprechend dem gewünschten Rohrverlauf ausrichten zu können, wird der Schaber an einer Abziehleere geführt, die durch zwei parallele und an den beiden Längsseiten der auszubildenden Rohrbettung angeordnete Schienen gebildet ist.

Aus der WO 2006/078854 A2 kennt man bereits ein System zur Herstellung eines Rohrbettes mit einem Planierschild, das derart über das Grabenbett gezogen wird, dass das zur Rohrbettung verwendete Material ein planes Rohrbett zur Auflage des Rohres bildet. Um das Planierschild über den Grabenboden führen zu können, ist am Grabengrund ein schienenartiger Stützrahmen vorgesehen, auf den ein das Planierschild tragender Rollwagen positionsgenau verfahren werden kann. Um die relative Position zwischen dem Rollwagen und dem darauf gehaltenen Planierschild ausrichten zu können, sind Hydraulikzylinder vorgesehen. Dabei wird zum Ausrichten des Planierschildes im Graben auch eine satellitengestützte Positionierungssteuerung vorgeschlagen. Das vorbekannte System erfordert jedoch stets das Einbringen des schweren Stützrahmens in den Graben, das Aufsetzen des das Planierschild tragenden Rollwagens, das Ausrichten des Planierschildes relativ zum Rollwagen mittels der Hydraulikzylinder und das anschließende Verfahren des Rollwagens auf dem Stützrahmen, was mit einem erheblichen Geräte- und Arbeitsaufwand verbunden ist.

Es besteht daher die Aufgabe, ein Verfahren sowie eine Vorrichtung der eingangs erwähnten Art zu schaffen, mit der rasch und mit geringem Aufwand eine Rohrbettung oder eine Rohrbettprofilierung hergestellt werden kann, die sich über ihre gesamte Längserstreckung durch eine gleichbleibend hohe Belastbarkeit, Tragfähigkeit, Verdichtbarkeit und Fertigungsgenauigkeit auszeichnet.

Die erfindungsgemäße Lösung dieser Aufgabe besteht bei dem Verfahren der eingangs erwähnten Art insbesondere darin, dass zum Ausheben der Rohrgrabensohle ein Baggeranbaugerät verwendet wird, das von den nachfolgenden Arbeitsschritten: Ausheben des Grabens, Herstellen der Grabensohle und Herstellen der Rohrbettung oder Rohrbettprofilierung zumindest ein Arbeitsschritt koordinatengesteuert mittels einer Koordinaten- oder Satelliten-(GPS-)Vermessungs- und Steuereinheit erfolgt, und dass die Rohrgrabensohle (4) mittels einem am Baggeranbaugerät installierten Koordinaten- oder Satelliten-(GPS-)Aufnahmesensor höhen-, flucht- und/oder neigungsgerecht gemäß den vorgegebenen Koordinaten oder GPS-Signalen hergestellt wird.

Bei dem erfindungsgemäßen Verfahren wird zunächst ein Graben ausgehoben, bevor anschließend die Rohrbettung oder Rohrbettprofilierung mittels einem Rohrbettfertiger hergestellt wird, der zumindest in einem Teilbereich seiner Außenkontur an die Außenkontur des zu verlegenden Rohres angepasst ist.

Um die Verlegung einer Rohrleitung automatisieren und rationalisieren zu können, und um das Rohr mit einer höchst möglichen Präzision auf dem Rohrbett verlegen zu können, sieht das erfindungsgemäße Verfahren vor, dass von den nachfolgenden Arbeitsschritten: Ausheben des Grabens, Herstellen der Grabensohle und Herstellen der Rohrbettung oder Rohrbettprofilierung zumindest ein Arbeitsschritt satelliten-(GPS-)- oder koordinatengesteuert mittels einer Satelliten-(GPS)- oder Koordinaten-Vermessungs- und Steuereinheit erfolgt. Je nach Stand der Vermessungstechnik oder der Lage der Baustelle (Innenstadt, Wald, etc.) kann auch nach dem GPS-Verfahren gearbeitet werden. Da zum Ausheben der Rohrgrabensohle ein Baggeranbaugerät verwendet wird, ist beispielsweise ein schienenartiger Stützrahmen und das Verfahren eines den Rohrbettfertiger tragenden Rollwagens auf dem Stützrahmen nicht erforderlich. Vielmehr erlaubt die Verwendung eines Baggeranbaugerätes, den mit der Durchführung des erfindungsgemäßen Verfahrens verbundenen Aufwand möglichst gering zu halten.

Um auch bereits die Rohrgrabensohle mit höchstmöglicher Präzision ausheben zu können, ist erfindungsgemäß vorgesehen, dass die Rohrgrabensohle mittels einem am Baggeranbaugerät installierten Satelliten-(GPS-)- oder Koordinaten-Aufnahmesensors höhen-, flucht- und/oder neigungsgerecht gemäß den vorgegebenen Koordinaten hergestellt wird.

Zweckmäßig kann es sein, dass nach dem Ausheben des Grabens zumindest ein Teil des ausgehobenen und/oder an der Grabensohle anstehenden Bodens aufbereitet und als Rohrbettmaterial verwendet wird.

Bevorzugt wird jedoch ein Verfahren, bei dem nach dem Herstellen der Grabensohle vorkonfektioniertes Rohrbettungsmaterial mit festgelegten oder geforderten Materialeigenschaften eingebracht wird. Bei dieser Verfahrensvariante wird zur Herstellung der Rohrbettung also auf ein werksseitig vorkonfektioniertes und somit baustellenfremdes Rohrbettungsmaterial, d. h. auf ein Fremdmaterial, und nicht auf das an der Baustelle gewonnene Aushubmaterial zurückgegriffen. Das werksseitig vorkonfektionierte Rohrbettungsmaterial zeichnet sich durch seine im Wesentlichen gleichbleibenden, festgelegten Materialeigenschaften aus, die die Herstellung eines Rohrbettes oder einer Rohrbettprofilierung mit einer über die gesamte Längserstreckung gleichbleibend hohen Belastbarkeit und Qualität erlaubt. Dabei wird zur Herstellung der Rohrbettung oder Rohrbettprofilierung ein Rohrbettfertiger verwendet, der zumindest in einem Teilbereich seiner Außenkontur an die Außenkontur des zu verlegenden Rohres angepasst ist.

Dabei sieht eine bevorzugte Ausführungsform gemäß der Erfindung vor, dass als Rohrbettfertiger ein Baggeranbaugerät mit Profilierungs-, Verdichtungs- und/oder Satelliten-(GPS-) oder Koordinatensteuerungsfunktion verwendet wird.

Um mit Hilfe des erfindungsgemäß verwendeten Rohrbettfertigers das Rohrbett oder die Rohrbettprofilierung rasch und mit geringem Aufwand in das in die Grabensohle eingebrachte Rohrbettungsmaterial einarbeiten zu können, ist es vorteilhaft, wenn der Rohrbettfertiger vorzugsweise koordinaten- oder GPSgesteuert nach Art eines Pfluges oder wie ein Torpedo durch das Rohrbettungsmaterial geführt wird.

Dabei wird die Reproduzierbarkeit der zur Herstellung erforderlichen Verfahrensschritte und die Positionsgenauigkeit des mit dem erfindungsgemäßen Verfahren erzielbaren Arbeitsergebnisses noch begünstigt, wenn die Koordinatensteuerung von einem im Landeskoordinatennetz oder Baustellen-Koordinatennetz eingebundenen Festpunktes aus angesteuert wird.

Bevorzugt wird ein Ausführungsbeispiel, bei dem als vorkonfektioniertes Rohrbettungsmaterial ein mineralisches Rohrbettungsmaterial verwendet wird.

Die mit dem erfindungsgemäßen Verfahren erreichbare rasche Arbeitsweise wird noch begünstigt, wenn als Rohrbettungsmaterial ein bei physikalischer oder chemischer Aktivierung reaktives und/oder verdichtbares Material verwendet wird.

Besonders vorteilhaft ist es, wenn die Abbindewirkung des Rohrbettungsmaterials durch Impfung mit zumindest einem Additiv ausgelöst und/oder verstärkt wird.

Besonders zweckmäßig ist es, wenn die Rohrbettungskontur mittels dem Rohrbettfertiger ausgebildet wird.

Dabei wird ein Verfahren bevorzugt, bei dem das Rohr in das vorzugsweise verdichtete und/oder abgebundene Rohrbettungsprofil eingelegt wird.

Um beispielsweise die Ursache für erst später aufgetretene Bauschäden leichter auffinden zu können, ist es zweckmäßig, wenn die Verdichtungswirkung des durch das Rohrbettungsmaterial geführten Rohrbettfertigers vorzugsweise mittels automatischer Datenerfassung protokolliert wird.

Um eine hohe Dichtigkeit, große Langlebigkeit und eine gute Resistenz gegen äußere und innere Korrosion der Rohrleitung zu erreichen, ist es vorteilhaft, wenn ein biegeweiches Kunststoff-Rohr in das Rohrbettungsmaterial eingelegt oder verlegt wird.

Die Rohrverlegetechnik lässt sich mit Hilfe des erfindungsgemäßen Verfahrens weitestgehend automatisieren und rationalisieren, wenn die Rohrabschnitte des in das Rohrbettungsmaterial eingelegten Rohres mittels Reibschweiß-Verfahren miteinander verbunden werden.

Die Handhabung des erfindungsgemäßen Verfahrens wird vereinfacht, wenn das vorzugsweise werksseitig vorkonfektionierte Rohrbettungsmaterial in Gebinden, Containern oder Silos bereitgestellt wird.

Die einfache Handhabung des erfindungsgemäßen Verfahrens wird noch begünstigt, wenn ein Rohrbettungsmaterial verwendet wird, das mit Additiven angereichert ist, die unter Vibrationseinwirkung das Abbinden eines dem Rohrbettungsmaterials beigemischten Bindemittels bewirken und vorzugsweise beschleunigen.

Die erfindungsgemäße Lösung der eingangs gestellten Aufgabe besteht bei der Vorrichtung zur Herstellung einer Rohrbettung oder einer Rohrbettprofilierung insbesondere darin, dass der Rohrbettfertiger entweder als Rohrprofilierungsdorn ausgebildet ist, der zumindest an einem Stirnende eine konifizierte Führungsspitze aufweist, oder als Rohrprofilierungshülse ausgestaltet ist, die in Vorschubrichtung einen stanzeisenartigen Hülsenendbereich hat, der beispielsweise offen oder geschlossen ausgebildet oder konvex oder konkav ausgestaltet sein kann.

Die erfindungsgemäße Vorrichtung weist einen Rohrbettfertiger auf, der zumindest in einem Teilbereich seiner Außenkontur an die Außenkontur des zu verlegenden Rohres formangepasst ist. Dabei ist dieser Rohrbettfertiger entweder als Rohrprofilierungsdorn ausgebildet, der zumindest an einem Stirnende eine konifizierte Führungsspitze hat, oder aber als Rohrprofilierungshülse ausgestaltet, die in Vorschubrichtung einen stanzeisenartigen Hülsenendbereich aufweist, welcher Hülsenendbereich beispielsweise offen oder geschlossen ausgestaltet oder konkav bzw. konvex ausgebildet sein kann. Um auch die das Rohrbett begrenzenden Längsseiten (Bankette) mit Hilfe der erfindungsgemäßen Vorrichtung gegen Ausweichen sichern, verdichten und planieren zu können, stehen an den Längsseiten des Rohrbettfertigers beidseits jeweils zumindest eine Führungsplatte oder -seite seitlich vor.

Um das Bettungsmaterial oder das dort anstehende Bodenmaterial planieren, abziehen und zugleich verdichten zu können, ist es vorteilhaft, wenn die Führungs- oder Seitenplatten an der in Vorschubrichtung orientierten Frontseite bugartig oder schlittenkufenartig aufgebogen sind.

Eine bevorzugte Weiterbildung gemäß der Erfindung sieht vor, dass in den Rohrbettfertiger ein Schwingungserzeuger eingebaut ist, mittels dem der Rohrbettfertiger in vorzugsweise frequenzsteuerbare, gerichtete und/oder protokollierbare Vibrationen versetzbar ist.

Weiterbildungen gemäß der Erfindung ergeben sich aus der nachfolgenden Beschreibung sowie den Ansprüchen. Nachstehend wird die Erfindung anhand eines bevorzugten Ausführungsbeispieles noch näher beschrieben.

Es zeigt in schematischer Darstellung:
- Fig. 1: einen bei der Herstellung einer Rohrbettung in einer Seitenansicht dargestellten Bagger, der an seiner Baggeranbaugeräte-Vorrichtung einen hier torpedoartig ausgestalteten Rohrbettfertiger trägt, mit dem die zur Verlegung einer Rohrleitung benötigte Rohrbettung in das in der Grabensohle befindliche Rohrbettungsmaterial eingeformt werden kann, und
- Fig. 2: den Bagger aus Fig. 1 in einer stirnseitigen Frontansicht.

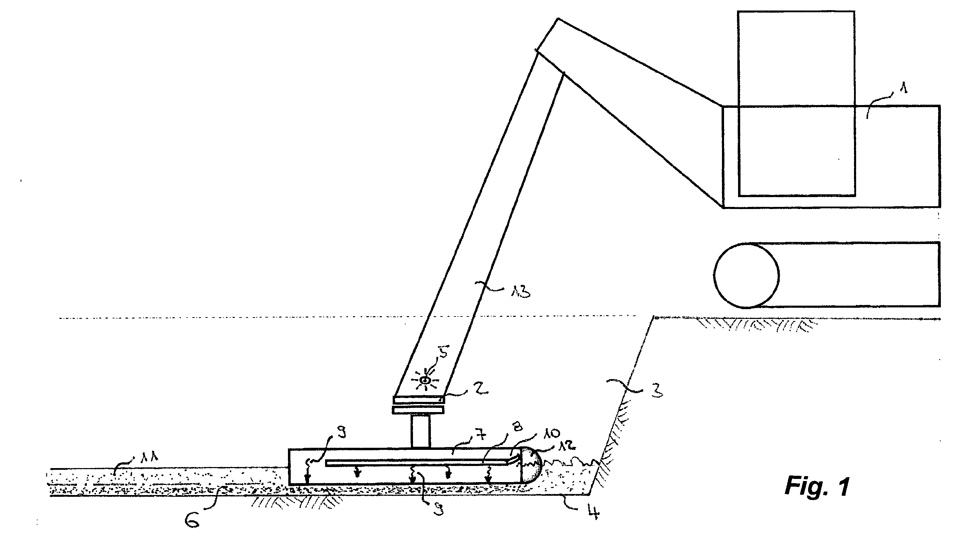

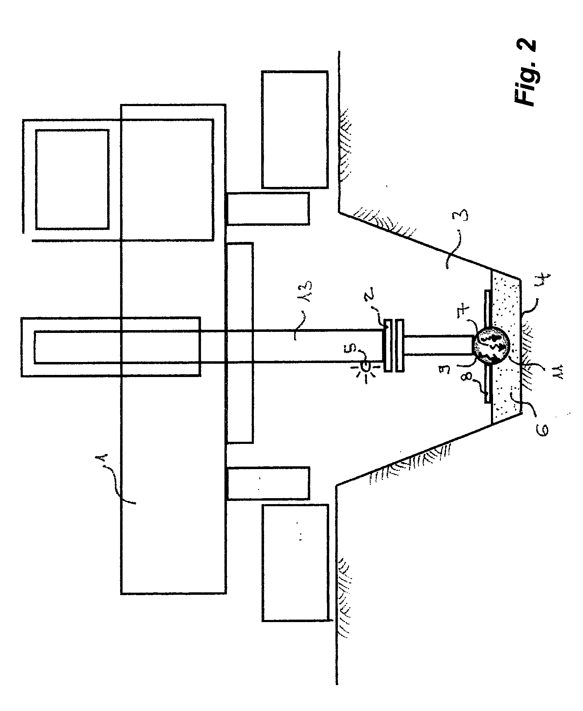

Die vorliegende Erfindung betrifft u.a. ein Verfahren zur Herstellung einer Rohrbettung, dessen Verfahrensschritte nachstehend anhand der Fig. 1 und 2 näher beschrieben werden:
Mit einem Bagger 1 moderner Bauart wird zunächst ein Rohrgraben 3 ausgehoben, um anschließend eine Rohrgrabensohle 4 herzustellen. Der Bagger 1 weist eine Baggeranbaugeräte-Vorrichtung 2 zum Anbau verschiedener Anbaugeräte auf, die für die einzelnen Verfahrensschritte benötigt werden. An der Baggeranbaugeräte-Vorrichtung 2 oder am Anbaugerät ist ein Koordinaten-Aufnahmesensor 5 installiert, der die positionsgenaue Lokalisierung des Baggers 1 und seines Anbaugerätes in Bezug auf einen vorzugsweise an das Landeskoordinatennetz oder Baustellen-Koordinaten angebundenen Festpunktes erlaubt oder nach GPS-Daten arbeitet. Mit Hilfe des Koordinaten-Aufnahmesensors 5 wird die Rohrgrabensohle 4 höhen-, flucht- und neigungsgerecht gemäß den vorgegebenen Koordinaten oder GPS-Daten hergestellt.

Der Koordinaten-Aufnahmesensor 5 überträgt die empfangenen Daten auf ein Display, das vorzugsweise eine Zielscheibenanzeige hat. Das Display und insbesondere auch die Zielscheibenanzeige erlauben es dem Baggerfahrer, die Kinematik des Baggers anhand der Digitalanzeige nachzuführen.

Um den Graben 3 ausheben und den Grabenaushub bewältigen zu können, wird an der Baggeranbaugeräte-Vorrichtung 2 zunächst ein konventioneller Grablöffel als Anbaugerät angedockt. Bereits dabei ergeben sich Vorteile, weil der Graben 3, entgegen der üblichen Rohrverlegemethode, nicht betreten werden muss, um das Erdplanum nach dem Laserstrahl nach konventioneller Technik zu vermessen und herzustellen.

In einem nachfolgenden Verfahrensschritt wird ein werkseitig hergestelltes Rohrbettungsmaterial in einer dem Graben- und Rohrprofil entsprechenden Menge auf der Rohrgrabensohle 4 aufgebracht. Das Rohrbettungsmaterial 6 ist in dem Sinne konditioniert, als seine wesentlichen Materialeigenschaften bekannt und/oder von Charge zu Charge gleichbleibend sind. Das homogene Rohrbettungsmaterial 6 kann ein mineralisches, standardisiertes, klassifiziertes und/oder vorkonfektioniertes Mörtelgemisch oder dergleichen Bettungsmaterial sein, das erforderlichenfalls mit einem Additiv geimpft wird, um die Stabilisierung und Verdichtung des Rohrbettungsmaterials zu verbessern. Dabei kann das vorgefertigte Rohrbettungsmaterial auch durch physikalische Aktivierung wie z.B. gerichtete Vibrationen aktivierbar und aushärtbar sein.

In einem weiteren Verfahrensschritt wird anschließend an die Baggeranbaugeräte-Vorrichtung 2 ein Rohrbettfertiger 7 montiert, der hier eine Profilierungs-, Verdichtungs- und Koordinaten- oder GPS-Steuerungsfunktion beinhaltet. Dieser Rohrbettfertiger 7 wird mit Hilfe des Koordinaten- oder GPS-Aufnahmesensors 5 koordinatengesteuert nach Art eines Pfluges derart durch das Rohrbettungsmaterial 6 geführt, dass das Rohrbettungsmaterial dadurch unter Freilegung eines der Rohr-Außenkontur entsprechenden Freiraumes 11 verdichtet wird. Der Rohrbettfertiger 7 ist zumindest in einem Teilbereich seiner Außenkontur an die Außenkontur des zu verlegenden Rohres formangepasst und hier als torpedoartiger Rohrprofilierungsdorn 7 ausgebildet. Der Rohrbettfertiger 7 weist an zumindest einem seiner Stirnenden eine sich verjüngende oder konifizierte oder abgerundete Führungsspitze 12 auf und hat hier an seinen Längsseiten beidseits jeweils zumindest ein platten- oder flügelartiges Führungs- oder Seitenelement 8, das seitlich vorsteht und an der in Vorschubrichtung orientierten Frontseite 10 des Führungs- oder Seitenelements 8 bugartig derart aufgebogen sein kann, dass das Bettungsmaterial 6 damit zu planieren, abzuziehen und zugleich zu verdichten ist.

Der Rohrbettfertiger 7 wird vom Baggerfahrer anhand der Daten ausgerichtet, die der Koordinaten-Aufnahmesensor 5 empfängt. Der Rohrbettfertiger kann beispielsweise als Stahlrohr ausgestaltet sein, welches der Außenkontur des zu verlegenden Rohres angepasst ist. Der Rohrbettfertiger wird vorzugsweise aus einem zylindrischen Rohr hergestellt; es sind aber auch Eiprofilrohrgeometrien, Rechteckkanalrohre, Rohre mit horizontaler Fußauflage oder alle anderen Rohrgeometrien möglich.

In den Fig. 1 und 2 wird mit dem Bezugszeichen 9 angedeutet, dass in den Rohrbettfertiger 7 ein Schwingungserzeuger eingebaut ist, mittels dem der Rohrbettfertiger 7 in vorzugsweise frequenzsteuerbare, gerichtete und/oder protokollierbare Vibrationen versetzt werden kann. Wird der vibrierende Rohrbettfertiger 7 durch das Rohrbettungsmaterial 6 bewegt, wird das konditionierte Rohrbettungsmaterial aktiviert, profiliert und verdichtet. Die Verdichtungswirkung kann gemessen und mittels einer Datenerfassung dokumentiert werden. Die Bettungskontur des in das Rohrbettungsmaterial 6 gezogenen Freiraumes 11 wird durch den Rohrbettfertiger und die an seinen beiden Längsseiten vorstehenden Führungs- oder Seitenelemente hergestellt. Durch die mit Hilfe des Rohrbettfertigers 7 erzeugten Vibrationen und Schwingungen wird das konfektionierte Rohrbettungsmaterial 6 aktiviert, zur schnellen Abbindung gebracht und optimal verdichtet. Durch die dornartige Ausbildung des Rohrbettfertigers 7 entsteht ein hier halb- oder drittelkreisförmig ausgebildeter, standfester und tragfähiger muldenförmiger Freiraum 11. Dieser muldenförmige Freiraum 11 ist der Außenkontur des zu verlegenden und einzubettenden Rohres angepasst. Die auf diese Weise hergestellte Rohrbettprofilierung stellt eine rohr- und erdstatisch optimale Rohrbettung für alle Rohrmaterialarten, vorzugsweise aber auch für biegeweiche Rohre, dar. Um den sogenannten Zwickel herzustellen und zu verdichten, muß der Graben nicht betreten werden, vielmehr wird dazu der Rohrbettfertiger verwendet, der das Rohrbett gleichzeitig formt und verdichtet. Da die Steuereinheit für die Baggerkinematik die Werte für das Ausrichten des Rohrbettfertigers 7 in Richtung, Höhe und Neigung von dem Koordinaten- oder GPS-Aufnahmesensor 5 erhält, kann der Rohrbettfertiger 7 kinematisch zielgenau durch das ausgebrachte Bettungsmaterial 6 gezogen werden. Die eingeschaltete steuerbare Vibrationsschwingung des Rohrbettfertigers 7 verdichtet zeitgleich während des Planiervorganges das Rohrbettungsmaterial 6 und den anstehenden Untergrund 4. Die seitlichen Führungs- oder Seitenelemente 8 wirken als Flügelglätter und Verdichter und verdichten die seitlichen Bankettbereiche des Bettungsmaterials 6 und des anstehenden Untergrundes.

Die seitlichen Führungs- oder Seitenelemente 8 können beispielsweise auf Kämpferhöhe (halbe Rohrhöhe) oder auf jeder beliebigen anderen Höhe am rohrförmigen Rohrbettfertiger gehalten sein. Bevorzugt wird jedoch eine Ausführungsform, bei der die Führungs- oder Seitenelemente 8 mit Abstand unterhalb der Rohrmittelebene des Rohrbettfertigers an diesen gehalten sind; bei einer solchen Anordnung der Führungs- oder Seitenelemente 8 wird die Anbringung dieser Führungs- oder Seitenelemente 8 derart im Drittelspunkt der Rohrhöhe angestrebt, die anschließend eine nahezu ideale Rohrauflage von 120 bis 130 Grad erzeugt.

Der Rohrbettfertiger 7 kann mit Hilfe eines Baggeranbauwechselsystems an dem Baggerausleger eines Baggers montiert werden. Die Koordinaten- oder Satelliten-(GPS-)Vermessungs- und Steuereinheit erhält nun die vom Koordinaten- oder Satelliten-(GPS-)Aufnahmesensor empfangenen Daten, die auf einem Display grafisch dargestellt werden. Der Baggerfahrer kann den Rohrbettfertiger nun bedienernachgeführt ausrichten und durch das Rohrbettungsmaterial durchziehen. Die Richtung, Höhe und Neigung des im Rohrbettungsmaterial durchgezogenen Rohrbettfertigers wird auf dem Display angezeigt. Die zuschaltbare, steuerbare Vibrationsschwingung im Rohrbettfertiger verdichtet während des Planiervorganges das Bettungsmaterial und gleichzeitig auch den anstehenden Untergrund. Die seitlichen Führungs- oder Seitenelemente 8 wirken als Flügelglätter und Verdichter und verdichten die seitlichen Bankettbereiche des Rohrbettungsmaterials und des anstehenden Untergrundes.

In das verdichtete und abgebundene Bettungsprofil 11 kann nun das zu verlegende Rohr eingelegt werden. Bei sogenannten HDPE-Reibschweißrohren wird das Rohr ebenfalls eingelegt und mit einem als Baggeranbaugerät konzipiertem Reibschweißgerät verschweißt. Die vorliegende Erfindung ermöglicht in rationeller, hoch automatisierter und qualitativ hochwertiger Weise den Einbau von Rohren in Gräben. Dabei erstreckt sich der Anwendungsbereich vom Freispiegelkanalrohrbereich für Schmutz- und Regenwasser hinaus über den Waserleitungsbereich, Leerrohre, Gasleitungsbereich, Pipelinebau, Fernwärmebereich und Fernleitungsbau auf alle Rohrarten, vorzugsweise aber auch auf die Verwendung von HDPE-Reibschweißrohren in Verbindung mit dem dazugehörigen Reibschweißgerät. Die Verdichtung des Rohrbettungsmaterials und die Verschweißung des aus einzelnen Rohrabschnitten hergestellten Rohres ist prüfbar, messbar und protokollierbar.

Das erfindungsgemäße Verfahren bietet sich insbesondere zur Anwendung bei den neuartigen HDPE-Reibschweißverfahren an. Dabei wird im Gegensatz zu den bisherigen Schweißverfahren, wie dem Heizwendel-Schweißmuffenverfahren oder dem Heizelement-Spiegelschweißverfahren, auch ein Baggeranbaugerät verwendet. Ein solches Baggeranbaugerät ist in der Lage, HDPE-Rohre oder andere Rohre, die ebenfalls reibschweißbar sind, muffenlos und außenwandbündig im Rohrgraben oder in der vom Rohrbettfertiger angefertigten profilierten Rohrbettungsmulde 11 zu verschweißen. Auch das Reibschweißverfahren der einzelnen Rohrabschnitte erfolgt vollautomatisch und kann somit mannlos im Graben erfolgen. Das erfindungsgemäße Verfahren ermöglicht eine vollautomatisierte und somit mannlose Rohrbettungstechnik und Rohrverlegetechnik mit hohem Qualitätsstandard. Das erfindungsgemäße Verfahren ersetzt mehrere bisher notwendige Arbeitsschritte und trägt somit zu erheblichen Rationalisierungen bei. Vorteilhaft ist das Verfahren auch bei Kunststoff-Well- oder Rippenrohren, wegen der hierfür wichtigen Zwickelverdichtung und Vorbeugung von (beziehungsweise gegen) Ovalisierungen.

Die im erfindungsgemäßen Verfahren verwendeten Rohre können einen runden, elliptischen, rechteckigen oder beliebig anders ausgestalteten Rohrquerschnitt haben. Um im erfindungsgemäßen Verfahren mit Hilfe der benötigten Baggeranbaugeräte auch die verschiedensten Rohre mit unterschiedlichen Rohr-Außenkonturen verlegen zu können, ist es vorteilhaft, wenn die Unterseite des Rohrfestigers durch eine lösbar befestigte Wechselplatte, automatische An- und Abdockvorrichtung ausgestaltet ist, die zumindest eine Bugplatte und/oder einen Profilierungsdorn umfasst. Mit Hilfe eines solchen Wechselplattensystems können unterschiedliche Rohrdimensionen und verschiedene Rohrquerschnitte berücksichtigt werden. Die verschiedenen Querschnitte können durch Aufdoppelungs-Montageschellen-Elemente im Baukastensystem modular aufbaubar sein, die an der Außenseite des vorzugsweise torpedoförmigen Rohrbettfertigers befestigt werden können.

Soweit auf werksseitig vorkonfektioniertes Rohrbettungsmaterial zurückgegriffen werden soll, kann dieses in Gebinden, Containern oder Silos bereitgestellt werden. Dieses Rohrbettungsmaterial ist vorzugsweise als mineralisches homogenes Mörtelgemisch vorkonfektioniert. Dabei kann dieses Mörtelgemisch mit einem mineralischen Bindemittel konditioniert werden, welches insbesondere durch Vibrationen zum Reagieren gebracht wird. Zusätzliche Additive im Rohrbettungsmaterial können vorgesehen sein, welche die Abbindewirkung unter Vibrationen auslösen und beschleunigen. Mit Hilfe des Rohrbettfertigers und des vorkonfektionierten Rohrbettungsmaterials kann ein formstabiles, muldenförmiges Rohrbett 6 nach Art des Formsandes hergestellt werden. In dieses Rohrbett lassen sich nach der Rohrbettherstellung Rohre oder anderweitige Leitungsbaukörper einlegen. Dabei wird der Rohrbettfertiger vom Baggerfahrer bedienergeführt navigiert und gesteuert, wobei die Herstellung der Rohrbettung oder des Rohrbettprofils mannlos auch in nur einem Arbeitsgang erfolgen kann.

## Patentansprüche

1. Verfahren zur Herstellung einer Rohrbettung mit folgenden Schritten:
a) Ausheben eines Grabens,
b) Herstellen einer Grabensohle,
c) Herstellen der Rohrbettung oder Rohrprofilierung mittels einem Rohrbettfertiger, der zumindest in einem Teilbereich seiner Außenkontur an die Außenkontur des zu verlegenden Rohres angepasst ist,
**dadurch gekennzeichnet, dass** zum Ausheben der Rohrgrabensohle (4) ein Baggeranbaugerät verwendet wird, das von den nachfolgenden Arbeitsschritten: Ausheben des Grabens (3), Herstellen der Grabensohle (4) und Herstellen der Rohrbettung oder Rohrbettprofilierung zumindest ein Arbeitsschritt koordinatengesteuert mittels einer Koordinaten- oder Satelliten-(GPS-)Vermessungs- und Steuereinheit erfolgt, und dass die Rohrgrabensohle (4) mittels einem am Baggeranbaugerät installierten Koordinaten- oder Satelliten-(GPS-)Aufnahmesensor (5) höhen-, flucht- und/oder neigungsgerecht gemäß den vorgegebenen Koordinaten oder GPS-Signalen hergestellt wird.

2. Verfahren nach Anspruch 1, **dadurch gekennzeichnet, dass** nach Herstellen einer Grabensohle zumindest ein Teil des ausgehobenen und/oder an der Grabensohle anstehenden Bodens aufbereitet und als Rohrbettungsmaterial im Graben verwendet wird.

3. Verfahren nach Anspruch 1, **dadurch gekennzeichnet, dass** nach Herstellen einer Grabensohle ein vorkonfektioniertes Rohrbettungsmaterial mit festgelegten oder geforderten Materialeigenschaften eingebracht wird.

4. Verfahren nach einem der Ansprüche 1 bis 3, **dadurch gekennzeichnet, dass** als Rohrbettfertiger (7) ein Baggeranbaugerät mit Profilierungs-, Verdichtungs- und/oder Koordinaten- oder Satelliten-(GPS-)steuerungsfunktion verwendet wird.

5. Verfahren nach einem der Ansprüche 1 bis 4, **dadurch gekennzeichnet, dass** der Rohrbettfertiger (7) vorzugsweise koordinaten- oder Satelliten-(GPS)gesteuert nach Art eines Pfluges durch das Rohrbettungsmaterial (6) geführt wird.

6. Verfahren nach einem der Ansprüche 1 bis 5, **dadurch gekennzeichnet, dass** die Steuerung von einem Festpunkt aus über das Landes- oder Baustellenkoordinatennetz oder nach GPS-Daten angesteuert wird.

7. Verfahren nach einem der Ansprüche 1 bis 6, **dadurch gekennzeichnet, dass** als Rohrbettungsmaterial ein mineralisches und/oder Rohrbettungsmaterial verwendet wird.

8. Verfahren nach einem der Ansprüche 1 bis 7, **dadurch gekennzeichnet, dass** als Rohrbettungsmaterial ein durch physikalische oder chemische Aktivierung reaktives und/o.der verdichtbares Material oder dergleichen Bettungsmaterial verwendet wird.

9. Verfahren nach einem der Ansprüche 1 bis 8, **dadurch gekennzeichnet, dass** die Abbindewirkung des Rohrbettungsmaterials (6) durch Impfung, Injektion und/oder mit zumindest einem Additiv ausgelöst und/oder verstärkt wird.

10. Verfahren nach einem der Ansprüche 1 bis 9, **dadurch gekennzeichnet, dass** die Rohrbettungskontur mittels dem Rohrbettfertiger (7) ausgebildet wird.

11. Verfahren nach einem der Ansprüche 1 bis 10, **dadurch gekennzeichnet, dass** das Rohr in das vorzugsweise verdichtete, abgebundene und tragfähige Rohrbettungsprofil (11) eingelegt wird.

12. Verfahren nach einem der Ansprüche 1 bis 11, **dadurch gekennzeichnet, dass** die Verdichtungswirkung des durch das Rohrbettungsmaterial (6) geführten Rohrbettfertigers (7) vorzugsweise mittels automatischer Datenerfassung protokolliert werden kann.

13. Verfahren nach einem der Ansprüche 1 bis 12, **dadurch gekennzeichnet, dass** ein biegeweiches Rohr in das Rohrbettungsmaterial (6) eingelegt oder verlegt wird.

14. Verfahren nach einem der Ansprüche 1 bis 13, **dadurch gekennzeichnet, dass** die Rohrabschnitte des in das Rohrbettungsprofil (11) eingelegten Rohres mittels Reibschweißen miteinander verbunden werden.

15. Verfahren nach einem der Ansprüche 3 bis 14, **dadurch gekennzeichnet, dass** das werksseitig vorkonfektionierte Rohrbettungsmaterial in Gebinden, Containern oder Silos bereitgestellt wird.

16. Verfahren nach einem Ansprüche 1 bis 15, **dadurch gekennzeichnet, dass** ein Rohrbettungsmaterial verwendet wird, das mit Additiven angereichert ist, die unter Vibrationseinwirkung das Abbinden eines dem Rohrbettungsmaterials beigemischten Bindemittels bewirken und vorzugsweise beschleunigen.

17. Vorrichtung zur Herstellung einer Rohrbettung oder einer Rohrbettprofilierung, die einen Rohrbettfertiger (7) aufweist, der zumindest in einem Teilbereich seiner Außenkontur an die Außenkontur des zu verlegenden Rohres formangepasst ist und an dessen Längsseiten beidseits jeweils zumindest ein Führungs- oder Seitenelement (8) seitlich vorsteht, **dadurch gekennzeichnet, dass** der Rohrbettfertiger (7) entweder als Rohrprofilierungsdorn ausgebildet ist, der zumindest an einem Stirnende (12) eine konifizierte Führungsspitze aufweist, oder als Rohrprofilierungshülse ausgestaltet ist, die einen stanzeisenartigen Hülsenendbereich hat.

18. Vorrichtung nach Anspruch 17, **dadurch gekennzeichnet**, das die Führungs- oder Seitenelemente (8) an der in Vorschubrichtung orientierten Frontseite (10) bugartig aufgebogen sind.

19. Vorrichtung nach Anspruch 17 oder 18, **dadurch gekennzeichnet, dass** in den Rohrbettfertiger (7) ein Schwingungserzeuger eingebaut ist, mittels dem der Rohrbettfertiger (7) in vorzugsweise frequenzsteuerbare, gerichtete und/oder protokollierbare Vibrationen (9) versetzbar ist.

20. Vorrichtung nach einem der Ansprüche 17 bis 19, **dadurch gekennzeichnet, dass** die Führungs- oder Seitenelemente in Vorschubrichtung schlittenkufenartig aufgebogen sind und/oder mit Abstand unterhalb der Längsmittelebene des Rohrbettfertigers an diesem gehalten sind.
